# EUROPÄISCHE PATENTSCHRIFT

(11) **EP 3 888 885 B1**
(45) Veröffentlichungstag und Bekanntmachung des Hinweises auf die Patenterteilung: **26.07.2023**
(21) Anmeldenummer: 21166855.3
(22) Anmeldetag: 02.04.2021
(51) Int. Cl.: B29C 49/68, B29C 49/64, B29C 49/06, B29K 67/00, B29L 31/00

(54) **MIKROWELLEN-DURCHLAUFOFEN**
MICROWAVE CONVEYOR OVEN
FOUR CONVOYEUR À MICRO-ONDES

(30) Priorität: 02.04.2020 DE 102020109278
(43) Veröffentlichungstag der Anmeldung: 06.10.2021
(73) Patentinhaber: Fricke und Mallah Microwave Technology GmbH, 31226 Peine (DE)
(72) Erfinder: MALLAH, Marcel, 31226 Peine (DE)
(74) Vertreter: Benedum, Ulrich Max

(56) Entgegenhaltungen:
- WO-A1-2006/105769
- DE-A1-102015 106 744
- DE-A1-102017 120 550
- FR-A1- 2 182 010

## Beschreibung

### GEBIET DER ERFINDUNG

Die vorliegende Patentanmeldung betrifft eine Vorrichtung und ein Verfahren zum dielektrischen Erhitzen und Umformen von Kunststoffrohlingen in eine gewünschte Gestalt [B29C 49].

### HINTERGRUND DER ERFINDUNG

Bei der Herstellung von Kunststoffflaschen für die Getränkeindustrie werden kontinuierlich Kunststoff-Vorformlinge erwärmt und mit einer Blasformmaschine oder Streckblasmaschine expandiert. Die Erwärmung erfolgt zumeist, indem die Vorformlinge auf einem Transportpfad an Infrarot-Heizelementen vorbeigeführt werden. Alternativ kann die Erwärmung mittels Heißluft erfolgen, was den Vorteil bietet, dass Heißluftgebläse sehr robust sind. Nachteilig ist der hohe Energiebedarf, denn Luft ist ein schlechter Wärmeträger und die Wärmeenergie muss auch auf die Vorformlinge übertragen werden. Die thermischen Verfahren sind nicht nur langsam, sie bedingen auch eine ungleichmäßige Erwärmung, da die Wärmeenergie nur durch die Oberfläche in den Körper gelangen kann. Neben der thermischen Behandlung haben in letzter Zeit alternative Erwärmungsverfahren zunehmend an Bedeutung gewonnen. Eine besondere Rolle nimmt die dielektrische Erwärmung mittels Mikrowellen ein und dabei die Umwandlung elektromagnetischer Feldenergie in dissipative Wärme.

EP 0 667 732 B1 beschreibt eine Mikrowellenanlage zum Erwärmen von kontinuierlich durchlaufendem Material, wobei in eine Mikrowellenkavität die Mikrowellen so einkoppelt werden, dass mehrere Einmoden-Stehwellen gleicher Frequenz vorliegen. Die Stehwellen stehen quer zur Durchlaufrichtung und gegeneinander um eine Viertel Wellenlänge versetzt. EP 2 100 479 B1 offenbart einen Mikrowellen-Durchlaufofen, in dem erste Mikrowellengeneratoren Mikrowellen eine Frequenz größer 1 GHz abstrahlen, die eine geringe Eindringtiefe in das Erwärmungsgut hat, und zweite Generatoren Mikrowellen einer Frequenz von 300 MHz bis 1 GHz, deren Eindringtiefe in das Erwärmungsgut größer ist. Der Durchlaufofen erlaubt ein Erwärmen und Trocknen von Vorformen aus Faserverbund- oder Holzwerkstoff sowie von keramischen Formteilen. Diese Technik ist anspruchsvoll und ungeeignet für die kontinuierliche Herstellung von Kunststoffflaschen, wo besonders Energieeffizienz und hohe Durchlaufgeschwindigkeit verlangt sind.

DE102014119 700 B3, DE102015122 976A1 und DE102017144 733.0 A1 offenbaren Mikrowellen-Anlagen zum Erhitzen und Verschweißen von Nähten und Faltlinien an Packungsmänteln im Durchlaufverfahren. Die Verfahren eignen sich nicht für das Erhitzen von Vorformlingen zum Blasen von Flaschen und Behältern.

DE10 2015 105 925 A1 schlägt parallel beladbare Resonatoreinheiten bzw. eine Pluralität räumlich begrenzter Mikrowellen-Kavitäten vor. In diese werden die Vorformlinge einzeln geführt und erwärmt. Die Einrichtung ist technisch aufwändig. DE 102017 120 550 A1 und DE 1020 1701 20 551 A1 offenbaren ein Vorbeiführen von Vorformlingen unter Rotation an stationären Mikrowellenapplikatoren, gleichbedeutend mit Schlitzantennen in einem Hohlleiter. DE 10 2015 106 744 A1 lehrt bewegliche Reflektoren zum Lenken von Mikrowellen auf einen zu erwärmenden Bereich an Vorformlingen. Dennoch besteht das Problem, dass die Applikatoren nicht gut genug sind, in den Vorformlingen das gewünschte Temperaturprofil für ein Blasen bzw. Streckblasen zu herzustellen. Andererseits dürfen auch keine Plasmabögen entstehen. Die Mikrowellen werden deshalb mittels Kunststofflinsen auf die vorbeilaufenden Vorformlinge fokussiert. Diese Lösung ist komplex, da die Linsen nicht thermisch belastbar sind und auch das fokussierte Mikrowellenfeld anfällig ist gegenüber Störungen. Der Stand der Technik repräsentiert das Problem. Weitere Verfahren und Vorrichtungen zum erwärmen von Kunststoffvorformlingen sind in den Dokumente Wo2006/105769A1 und FR2182010A1 beschrieben.

### KURZBESCHREIBUNG DER ERFINDUNG

Das Problem wird gelöst durch ein Verfahren nach Anspruch 1 und eine Vorrichtung gemäß Anspruch 6. Bevorzugte Ausführungsformen sind den Unteransprüchen zu entnehmen.

Es ist offenbart ein Verfahren zum dielektrischen Erwärmen von Kunststoff-Vorformlingen mittels Mikrowelle in einer Durchlaufofeneinrichtung, so dass sie dann in eine gewünschte Gestalt umgeformt werden können. Erfindungsgemäß wird (i) ein Mikrowellenfeld mit einer Frequenz von 900 bis 930 MHz zwischen zwei Leiterplatten (50) erzeugt, wobei (ii) die hochfrequenten Signale um eine halbe Wellenlänge versetzt auf die Leiterplatten eingespeist werden, so dass ein symmetrisches Differenzialleitersystem vorliegt. (iii) Die Leiterplatten sind den Vorformlingen (40) entsprechend bemessen und optional konturiert und strukturiert, vorteilhaft beispielsweise durch Aussparungen, Schlitze, Löcher, (iv) Die zu erwärmenden Kunststoffvorformlinge werden auf einem Transportpfad im Mikrowellenfeld zwischen den Leiterplatten vorbewegt, (v) Die zwei Leiterplatten (50) sind in einem hohlleiterförmigen Gehäuse (100) aufgenommen. (vi) Das hohlleiterförmige Gehäuse, die Leiterplatten, die Frequenz des elektromagnetischen Felds und die dielektrische Konstante der Kunststoffvorformlinge werden so gewählt, dass sich die TEM-Wellen gebunden zwischen den Leiterplatten und im hohlleiterartigen Gehäuse trotz Störung und Erwärmung des oder der Vorformlinge als Einmoden-Welle quer zur Bewegungsrichtung der Vorformlinge ausbreitet. Die zwei Leiterplatten können planparallel sein, trapezförmig stehen und/oder Schlitze, Löcher und Öffnungen aufweisen, um die Feldstärkenkomponente der leitergebundenen elektromagnetischen TEM-Wellen dem abzubildenden volumetrischen Temperaturprofil im Vorformling anzupassen. Fakultativ können die Leiterplatten eigens durch Vor- und Rücksprünge konturiert oder durch Aussparungen, Löcher, Schlitze strukturiert sein, so dass sie ein gestaltetes volumetrisches Temperaturprofil in den Vorformlingen abbilden. Das Gehäuse als Wellenhohlleiter zu konstruieren ist eine vorteilhafte Zielvorgabe, aber kein zwingendes Erfordernis, denn das konstruktive Ziel für das Gehäuse ist primär ein Schutz vor Berührung bzw. Leckstrahlung. Die Umhausung des differenziellen Doppelleiters ist bevorzugt so, dass sich die Ausbreitung des leitergebundenen Mikrowellen-Gegentaktfelds auf den Raum zwischen den Leiterplatten konzentriert bzw. die Umhausung die TEM-Wellen nicht stört. Der Fachmann erkennt, dass Umhausungen mit größeren bzw. anderen Abmessungen als im Beispiel möglich sind.

Die Phasendifferenz an den parallelen Doppelleitern kann durch ein Balun hergestellt werden. Alternativ können im Gegentaktbetrieb arbeitende Mikrowellengeneratoren ein leitergebundenes symmetrisches Mikrowellenfeld erzeugen. Das leitergebundene Feld ist als "symmetrisch" beschrieben, da die elektrischen Potenziale nicht gegen Masse sind. Das symmetrische Gegentaktfeld liegt zwischen zwei von Masse getrennten Leiterplatten. Die Umhausung der Leiterplatten ist auf Masse, was für die Funktion des Gegentakt-Doppelleitersystems nur bei schlechter Anordnung und Ausführung als Störgröße abträglich ist. Das erfindungsgemäße Verfahren beinhaltet ein Portieren der Vorformlinge durch das Mikrowellen-Gegentaktfeld. Dies kann erfolgen mittels einer externen Portiereinrichtung durch einen Schlitz im länglichen Gehäuse. In bevorzugten Ausführungsformen unter Drehen um die Längsachse der Vorformlinge. Die Halterung für den zu erwärmenden Vorformling ist bevorzugt aus Mikrowellen-transparentem Material.

Ein weiterer Aspekt betrifft eine Vorrichtung zum Blasen oder Umformen der Vorformlinge in eine gewünschte Gestalt, wobei die Vorformlinge beim Durchlaufen einer Heizzone mittels Mikrowellen erwärmt werden. Sie durchlaufen hierzu erfindungsgemäß auf einem Transportpfad das Mikrowellen-Gegentaktfeld zwischen den Leiterplatten. Das leitungsgebundene Mikrowellen-Gegentaktfeld im Durchlaufofen ist erfindungsgemäß stabil gegenüber Störungen und Diskontinuitäten, beispielsweise aufgrund Temperaturänderungen oder portierten erwärmten Vorformlingen, und mit den Leitungen kann man gezielt ein volumetrisches Temperaturprofil in den Vorformlingen abbilden. Das leitungsgebundene Mikrowellen-Gegentaktfeld ist im Betrieb weniger störanfällig gegenüber der Bildung höherer Moden. Es ist auch temperaturstabiler als Mikrowellenfelder, die mittels Kunststofflinsen auf die Vorformlinge konzentriert werden, da sich die Linsen bei den nötigen hohen Temperaturen im Durchlaufofen verformen können.

Die erfindungsgemäße Anlage umfasst außerhalb der Heizzone bzw. des Ofens mindestens einen Mikrowellengenerator sowie einen Balun für den Phasenversatz um 180° vor Einspeisung der Signale auf den Differenzialleiter bzw. Doppelleiter. Anstelle des Baluns können auch zwei Mikrowellengeneratoren im Gegentaktbetrieb die Signale in den Doppelleiter einspeisen.

In einer bevorzugten Ausführungsform sind zwischen Mikrowellenerzeugungseinrichtung und Differenzialleiter weiter ein Isolator und ein Tuner zur Anpassung der Impedanz eingerichtet. Das Balun kann eine Umwegleitung für die Phasenverschiebung an den beiden Ausgängen haben, bevorzugt eine λ / 2 - Umwegleitung.

Die erfindungsgemäße Durchlaufheizeinrichtung kann in einer Anlage hoher Arbeitsgeschwindigkeit zum Blasen oder Streckblasen von Kunststoffvorformlinge zu Flaschen und Behältern integriert sein

Weitere Aspekte betreffen Verfahren und Vorrichtungen zum Erwärmen von Blasrohlingen (40) mittels Mikrowellen in einem Durchlaufofen, so dass diese in eine gewünschte Gestalt geformt werden können. Dazu wird ein Mikrowellenfeld mit einer Frequenz von 900 bis 930 MHz zwischen zwei Leiterplatten (50) erzeugt, das sich dadurch auszeichnet, dass die hochfrequenten Signale an den Leiterplatten mittels eines Symmetrierglied bzw. Gegentaktglieds um eine halbe Wellenlänge versetzt werden. Die Leiterplatten sind der Größe der Blasformlinge (40) entsprechend bemessen, konturiert oder ausgeschnitten, um die Größe der elektrischen Feldkomponente der differenziellen Mode vorzugeben, so dass ein entsprechendes volumetrisches Temperaturprofil im Blasrohling abgebildet wird. Der Blasrohling wird auf einem Transportpfad im Feld des Differenzialleitersystems bewegt. Das Gehäuse bzw. der Mikrowellenhohlleiter (100) ist so ausgelegt, dass sich ein Feld von 900 bis 930 MHz ausbreiten kann. Der Wellenhohlleiter, die differenziellen Leiterplatten, die Mikrowellenfrequenz und die dielektrische Konstante des Kunststoffmaterial werden erfindungsgemäß gewählt, dass sich die TEM-Wellen zwischen den Leiterplatten trotz der Störung aufgrund der Blasrohlinge bzw. Vorformlinge stets monomode querstehend in Richtung des Transportpfads ausbreiten. Die aufgrund der Diskontinuitäten gebildeten höheren Moden konvertieren dann systembedingt wieder in die leitungsgebundene differentielle Mode.

### KURZBESCHREIBUNG DER ABBILDUNGEN

Weitere Vorteile, Merkmale und Ausführungsformen der Erfindung sind der nachstehenden Beschreibung, den Beispielen und den anliegenden Zeichnungen zu entnehmen.

Es zeigt:
- **Fig. 1**: ein Blockdiagramm mit den Komponenten der erfindungsgemäßen Einrichtungen zum Erwärmen von Kunststoff-Vorformlingen;
- **Fig. 2**: eine perspektivische Darstellung der Erwärmungseinrichtung mit einer Anordnung Vorformlinge (40) auf ihrem Transportpfad durch das leitergebundene differenzielle elektrische Feld zwischen den Leiterplatten (50) in einem geschlitzten Gehäuse (100);
- **Fig. 3**: eine Stirnansicht (die Y-Z-Ebene) der differenziellen Leiterplatten (50), die Vorformlinge (40) sowie des Mikrowellenraums (90) in einem Wellenhohlleiter (Typ R9/RW975) mit Schlitz (30) in der Deckenwand;
- **Fig. 4**: eine Draufsicht (die X-Z-Ebene) auf die differenziellen Leiterplatten (50) mit der Anordnung einzelner Vorformlinge (40) auf ihrem Transportpfad im Mikrowellenfeld quer zur Bewegungsrichtung;
- **Fig. 5**: ein Diagramm der S-Parameter (Box: S bei f = 915 MHz) in Dezibel bei einer simulierten Diskontinuität (Erwärmung eines Vorformlings) bei Frequenzen von 880 MHz bis 950 MHz (S1,1 Eingang/Ausgang) und die Konversion eventueller höherer Moden (S3,1; S4,1 ...);
- **Fig. 6**: ein Diagramm der S-Parameter (Streuparameter) in Dezibel aufgrund der Kunststoffvorformlinge im Mikrowellenfeld (f = 915 MHz);
- **Fig. 7**: ein Diagramm der Leistungsverlustdichte in Watt pro Kubikmeter (der in den Vorformlingen volumetrisch dissipierten Energie) bei einer Frequenz von 915 MHz;
- **Fig. 8**: eine Darstellung der Y-X-Ebene des elektrischen Feldes V/m bei 915 MHz längs des Transportpfads der Vorformlingen, welche als Striche angedeutet sind;
- **Fig. 9**: eine Darstellung der Y-Z-Ebene des elektrischen Feldes V/m bei 915 MHz am Vorformling (40) zwischen den Differenzleitungen (50);
- **Fig. 10**: eine Darstellung der Y-X-Ebene der Leistungsdichte des elektrischen Feldes von 915 MHz in Voltampere pro Quadratmeter (VA/m²) über die Länge der Erwärmungszone;
- **Fig. 11**: eine Darstellung der Y-X-Ebene der Leistungsverlustdichte-Verteilung im elektromagnetischen Feld bei 915 MHz in Watt pro Kubikmeter (W/m³) über die Länge der Erwärmungszone;
- **Fig. 12**: eine Darstellung der Y-Z-Ebene (Stirnseite) der Leistungsverlustdichte-Verteilung im elektromagnetischen Feld bei 915 MHz in Watt pro Kubikmeter (W/m³);
- **Fig. 13**: eine Darstellung der Y-Z-Ebene (Seitenansicht) der Leistungsverlustdichte-Verteilung im elektromagnetischen Feld bei 915 MHz in Watt pro Kubikmeter (W/m³);
- **Fig. 14**: eine Darstellung der X-Z-Ebene (Draufsicht) der Leistungsverlustdichte-Verteilung im elektromagnetischen Feld bei 915 MHz in Watt pro Kubikmeter (W/m³) die Leistungserbringung einer gleichmäßigen Wärmeverteilung;
- **Fig. 15**: eine Prinzipdarstellung der Leistungsverlustdichte-Verteilung (dissipierte Wärme) im elektromagnetischen Feld vor und nach Drehung der Vorformlinge um 90 Grad in der Längsachse.

### EINGEHENDE BESCHREIBUNG DER ERFINDUNG

Die Erfindung betrifft die gezielte dielektrische Erwärmung von Kunststoff-Vorformlingen ohne eine größere thermische Belastung der weiteren Komponenten der Ofeneinrichtung und insbesondere der Transporteinrichtungen. Die mikroskopischen Mechanismen, die der dielektrischen Erwärmung mittels Mikrowellen zugrunde liegen, sind die dissipative Reorientierung permanenter Dipolmomente und die dissipative Bewegung von Ladungsträgern unter dem Einfluss des elektromagnetischen Felds. Die Effizienz dieser Energieumwandlung ist durch die komplexe dielektrische Funktion und ihre Temperatur- bzw. Frequenzabhängigkeit vorgegeben, welche in einem weiten Temperatur- und Frequenzfenster mittels der breitbandigen dielektrischen Spektroskopie gemessen werden kann. Mit diesen Messungen eröffnet sich die Möglichkeit, die elektromagnetischen Felder und daraus abgeleitet, die Verteilungen der Leistungsverlustdichte im Erwärmungsfeld zu simulieren. Die erfindungsgemäßen Simulationen zeigen, dass ein leitergebundenes Mikrowellenfeld mit einer Frequenz von ca. 900 bis ca. 930 MHz in einem symmetrischen Doppelleitungssystem geeignet ist für ein dielektrisches Erwärmen von Kunststoff-Vorformlingen im kontinuierlichen Durchlaufverfahren. Symmetrisch bedeutet in diesem Zusammenhang, dass zwei gegen Massepotential gleich große gegenphasige Wechselspannungen an den Leiterplatten anliegen und die Energie der so leitergebundenen Mikrowelle entsprechend dem Transportpfad der Vorformlinge sich ausbreiten kann. Die beiden Leiterplatten sind mit räumlichem Abstand parallel angeordnet. Bevorzugt können die Leiterplatten zusätzlich konturiert oder mittels Aussparungen (Schlitze, Löcher) strukturiert sein, wodurch man eine örtliche Konzentrierung oder Fokussierung des elektrischen Feldes erreichen kann. Ziel ist eine homogene dissipative Wärmeerzeugung in portierten Vorformlingen gemäß dem erforderlichen volumetrischen Temperaturprofil für die Umformung oder den Blasvorgang.

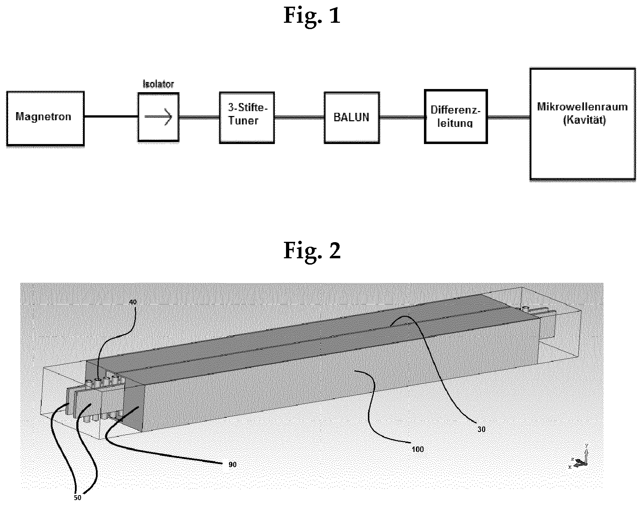

Figur 1 zeigt eine Anordnung der Hauptkomponenten. Die Mikrowellen werden in einem Mikrowellengenerator mit einer Frequenz von ca. 900 bis ca. 930 MHz erzeugt, zum Beispiel mittels eines Magnetrons. Dieses muss man durch einen Isolator schützen, da bei vielen Mikrowellen-Anwendungen die reflektierte Leistung das Magnetron beschädigen kann. In der Praxis ist Augenmerk auf die Kühlung der Mikrowellengeneratoren und der Magnetronköpfe zu legen. Diese werden in der Regel wassergekühlt, wie auch der Isolator und die Mikrowellenabsorber, da selbst bei einem optimierten Mikrowellenraum (einer optimierten Kavität) mit minimaler Reflexion ein Teil der Leistung zurückläuft. Auch müssen 3-Sub-Tuner, Isolatoren (Zirkulatoren), Richtkoppler, Koaxial-zu-Wellenleiter-Übergänge angepasst werden. Die Impedanzanpassung zwischen Last und Magnetron kann durch einen Drei-Stifte-Tuner erfolgen. Der Prozess der Mikrowellenerzeugung ist bei höheren Ausgangsleistungen ferner anspruchsvoll, und er verlangt eine stabile Energieversorgung (nicht dargestellt), da schon geringe Leistungsschwankungen die Lebensdauer des Magnetrons beschränken. Geeignet ist beispielsweise ein *Low Ripple Switch Mode Power Supply* (LR-SMPS) der Fricke und Mallah Microwave Technology GmbH, Peine, DE. Die Stromversorgungen in dieser Einheit enthalten alle Schaltungen, um ein entferntes Magnetron mit kontrollierter Leistung zu betreiben. Figur 1 zeigt den prinzipiellen Aufbau der Mikrowellen-Ofeneinrichtung zum dielektrischen Erwärmen von Vorformlingen, so dass diese kontinuierlich nacheinander zu Flaschen geblasen bzw. umgeformt werden können.

Es folgt in Figur 1 auf den Isolator ein Stub-Tuner zur Anpassung der Impedanz und ein Balun. Balun ist ein Portemanteau (balanced-unbalanced) für eine Schaltung bzw. ein elektrisches Bauteil, zumeist in der Signalübertragung verwendet, für die Umwandlung von unsymmetrischen Signalen in symmetrische Signale für ein Doppelleitersystem. Das kann beispielsweise eine λ/2-Umwegleitung oder ein Verzögerungselement sein, beispielsweise ein Transformator. An den beiden Ausgängen des Baluns liegen nach Wandlung symmetrische Gegentaktsignale gleicher Amplitude an, deren Phasenlagen bevorzugt um 180° versetzt sind. Die Signale werden im Weiteren in ein Zweileitersystem (50) eingespeist. Das resultierende elektromagnetische Wechselfeld konzentriert sich so auf den Raum zwischen den zwei länglichen Leiterplatten. Das differenzielle oder Zweileiter-System (50) ist in einer Mikrowellenkavität (100) angeordnet, bevorzugt im Inneren eines Wellenhohlleiters des Typs R9/WR97, so dass das Gehäuse das elektromagnetische Feld (90) nicht beeinflusst, sondern nur wirksam nach außen abschirmt. Damit sind die Komponenten (Isolator, manueller 3-Stifte-Tuner) zur Anpassung der Mikrowelleneinheit an die Last beschrieben. Die Betriebsfrequenz liegt bevorzugt im Bereich von 900 MHz bis 930 MHz. Die Isolations- und Rückflussdämpfung beträgt in den Beispielen bevorzugt minimal 23 dB, die Leistungsdämpfung bevorzugt maximal 0,15 dB.

Figur 2 zeigt eine perspektivische Darstellung mit einer Anordnung Vorformlingen (Flaschenvorformlingen) im differenziellen Doppelleitersystem (50). Die Vorformlinge treten durch einen Eingangsport in das Mikrowellengehäuse (100) ein. Das Mikrowellengehäuse (100) hat in der Deckenwand einen Schlitz (30), damit Haltevorrichtungen (nicht gezeigt) kontinuierlich die Vorformlinge auf ihrem Transportpfad vorbewegen und, optional, drehen können. In einigen Ausführungsformen können die Haltevorrichtungen Kettenelemente sein, an denen die Vorformlinge aufgehängt sind. Damit können die Vorformlinge kontinuierlich und kontrolliert durch das elektromagnetische Feld zwischen den differenziellen Leiterplatten (50) portiert und optional auch gedreht werden. Das Mikrowellengehäuse (100) ist bevorzugt ein geschlitzter Wellenhohlleiter des Typs R9/WR972, so dass eine Mikrowelle von 915 MHz im Gehäuse in Transportrichtung wandern kann. Über dem Schlitz (30) ist bevorzugt eine Drossel angeordnet, so dass keine Mikrowellen in die Umgebung lecken können. An den beiden Ports der Kavität (100) sind Mikrowellenabsorber (nicht gezeigt) angeordnet bzw. Mikrowellenfallen zum Schutz vor austretenden Mikrowellen.

In einigen Ausführungsformen werden die Vorformlinge (40) senkrecht stehend oder hängend zur Durchlaufrichtung vorbewegt. Die Längsachse der Kunststoff-vorformlinge steht dann senkrecht zur Transportrichtung. Die Vorformlinge können auch auf einem Band stehen. Bevorzugt ist eine Hängung an Ketten oder Seilen. Die Transporteinrichtung besitzt in einigen Ausführungsform Einrichtungen zum Halten oder Hängen der Vorformlinge, so dass sie in der Heizzone gezielt im leitergebundenen elektromagnetischen Feld erwärmt werden können.

In einigen Ausführungsformen kann die Halte- und Transporteinrichtung auch Einrichtungen aufweisen, welche die Vorformlinge während der dielektrischen Erwärmung um die vertikale Längsachse drehen. Die Dreheinrichtung kann Motoren beinhalten, die den einzelnen Halteeinrichtungen funktionell zugeordnet sind. Werden die Vorformlinge frei hängend durch die Heizzone portiert, kann das Drehen der Vorformlinge auch durch Reibung an geeignet bemessenen Lenk- und Wandplatten erfolgen. Wichtig ist, dass die Vorformlinge einheitlich auf dem Pfad durch die Heizzone bewegt und gedreht werden und nicht verschieden.

In einigen Ausführungsformen kann die Dreheinrichtung an der Halteeinrichtung der hängenden Kunststoffvorformlinge angreifen. So kann die Dreheinrichtung ein gezahntes Element sein, zum Beispiel ein Zahnrad oder ein Zahnriemen. Die Zähne greifen mit den einzelnen Halteeinrichtungen ein und führen so ein Drehen der Halteeinrichtung herbei. Besonders bevorzugt ist die Vorformlinge während der dielektrischen Erwärmung pro Sekunde 0,5- bis 20-mal um die Längsachse zu drehen. Die Vorbewegung der Formlinge liegt bevorzugt zwischen 0,1 m/s und 1 m/s.

Das Verfahren zum dielektrischen Erwärmen von Kunststoff-Vorformlingen in einem elektromagnetischen Wechselfeld von 900 bis 930 MHz erfolgt bevorzugt im Inneren eines mit Schlitz (30) versehenen Wellenleiters des Typs WR975 (IEC Standard R9) als Mikrowellenkavität bzw. Gehäuse. Das Verfahren umfasst das Einrichten einer im Wesentlichen parallelen differenziellen Doppelleitung (50) mit einer Phasenverschiebung von 180°, z.B. durch ein Balun. Wegen der höheren Potenziale wird eine Konzentrierung des elektrischen Feldes auf den Raum zwischen den differenziellen Leiterplatten erreicht. Das Feld kann durch eine Konturierung und Strukturierung der Leiterplatten wunschgerecht fokussiert und profiliert werden. Der Leistungsverlust und die resultierende dielektrische Erwärmung erfolgt, indem Vorformlinge in Reihe und geordnet durch das Feld vorbewegt werden. Die dielektrische Erwärmung in bestimmten Bereichen der Vorformlingen erlaubt dann, diese zu Kunststoffflaschen zu blasen und umformen zu können. Das Beispiel zeigt in einer Simulation die Lokalisierung der Leistungsverlustdichte in den Formlingen, gleichbedeutend mit der dissipativen Wärmeerzeugung im Kunststoffmaterial. Das leitungsgebundene Mikrowellenfeld erlaubt somit im Gegensatz zu den thermischen Verfahren einen intensiveren Heizschritt und eine bessere Energienutzung. Anders als im Stand der Technik erfolgt die Mikrowellenbehandlung nicht durch Vorbeiführen der Objekte an Mikrowellenkavitäten oder an Antennen, sondern erfindungsgemäß durch das Einführen der Vorformlinge in ein Gegentaktfeld einer symmetrischen Doppelleitung, das eine stabile Mode besitzt, die auch bei durchbewegten Diskontinuitäten und Vorformlingen stabil bleibt. Die Stabilität des Gegentaktfeldes wird weiterhin gewahrt durch die Mikrowellenkavität, den geschlitzten Standardwellenleiter R9/WR975, der einerseits die Außenwelt vor den Mikrowellen abschirmt und anderseits das symmetrische Gegentaktfeld nicht beeinflusst. Optional kann die Mikrowellenkavität bzw. die Umhausung innen mit einem Absorber für Mikrowellen versehen sein.

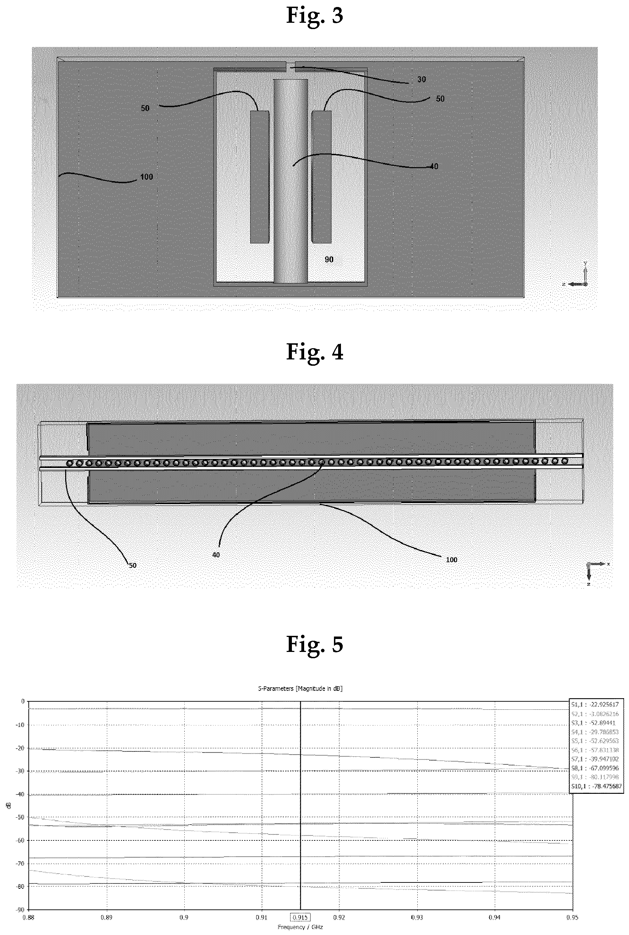

Figur 5 zeigt ein Diagramm der simulierten Moden im Frequenzbereich von 880 bis 950 MHz und konkret bei 915 MHz und die möglichen Modekonversionen auf ein oder mehrerer Diskontinuitäten, also während der Erwärmung der durchlaufenden Vorformlingen. Der differenzielle Mode und der Gleichtaktmode sind zueinander orthogonal. Diese TEMs wandern unabhängig voneinander im Differenzialleitersystem bzw. zwischen den Doppelleitungen. Tritt eine Diskontinuität auf, beispielsweise wegen einer Änderung der Dielektrizitätskonstante aufgrund von Objekten wie Vorformlingen, dann kommt es zu einem Energieaustausch zwischen den Moden am Ort der Diskontinuität. Dies kann zur Bildung höherer Moden führen. Der Grundmode ist in diesem Fall der differenzielle TEM. Höhere Moden (S3,1; S4,1; ...) in Figur 5 beschreiben nicht leitungsgebundene Moden, die aufgrund der Diskontinuität an den Vorformlingen gebildet werden. Die Vorformlinge stören das Feld aber nur lokal und die höheren Moden (S3,1; S4,1 ...) konvertieren in dem erfindungsgemäßen leitungsgebundenen System in den differenziellen Mode (S2,1), also in den leitungsgebundenen Mode zurück. Der Energieverlust der differenziellen Mode von 3 dB wird in den Vorformlingen lokal in dissipative Wärme umgewandelt. Durch die Verlängerung des differenziellen Doppelleitersystems oder, bevorzugt durch Konturierung und Strukturierung der Leiterplatten lässt sich eine Energieübertragung der differenziellen Mode von 10 dB und mehr erreichen. Bei einer Arbeitsfrequenz von 915 MHz ist somit garantiert, dass wie in dem gezeigten Beispiel die Erwärmung durch das leitungsgebundene differenzielle TEM-Feld erfolgt. Bei der Verwendung von Mikrowellenstrahlern (Resonatoren) und Kavitäten wie im Stand der Technik liegt hingegen ein Feld mit komplexen Moden vor, was die dielektrische Erwärmung störempfindlich macht, zudem temperaturabhängig und auch beeinflussbar durch die Form der äußeren Umhausung. Unterschiedliche Moden sind unerwünscht, denn sie bedingen ein unkontrollierbares und lokal unbestimmtes elektrisches Feld, das nicht zur Erwärmung von durchlaufenden Vorformlingen in einem gewünschten volumetrischen Temperaturprofil beitragen kann.

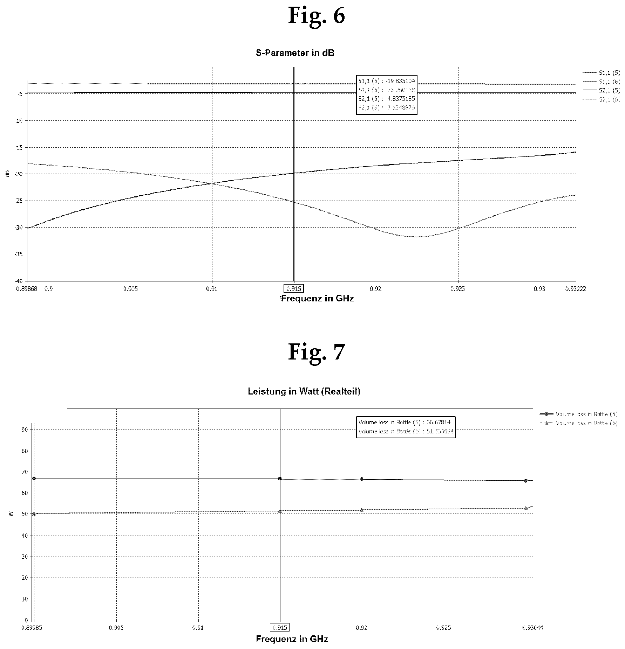

Figur 6 zeigt die S-Parameter des repräsentativen Modells, die niedrige Reflexion für verschiedene dielektrische Konstanten sowie den Verlusttangens der Probenanordnung. Der Verlustfaktor ist dann gleich dem Tangens des Verlustwinkels zwischen dem Realteil der komplexen Größe und ihrem Imaginärteil (tan D = Im/Re). Der Verlustfaktor beschreibt das Verhältnis des verlustbehafteten Realteils zum verlustfreien Imaginärteil der komplexen Größe. Der Verlustfaktor gibt an die Energie, die sich in den Objekten, den Vorformlingen durch Dissipation in Wärme umwandelt. Je nach dielektrischer Konstante beträgt der Verlustfaktor zwischen 5-10 bzw. 0,1-0,2, wobei der Transmissionsanteil ca. 3 dB bis 4,8 dB ist. Der volumetrische Leistungsverlust in den Vorformlingen beträgt somit zwischen 50-66 %; siehe Figur 7.

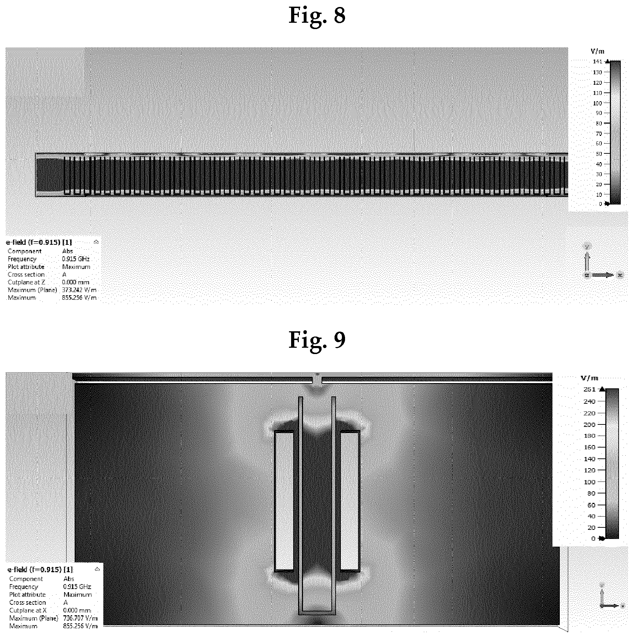

Die Figuren 8 und 9 zeigen die Stärke des elektrischen Felds V/m in Längsrichtung (Y-X-Ebene) und Querrichtung (Y-Z-Ebene). Das elektrische Feld ist im Raum zwischen den differenziellen Plattenleitern (50) lokalisiert und verbreitet sich über deren gesamte Länge. Den Längsschlitz (30) in der Deckenwand der Umhausung (100) wird benötigt für die Transporteinrichtung und die Halterungen für die zu erwärmenden Vorformlinge. Der Positionen sind in Figur 8 durch U-Striche angedeutet. Am Längsschlitz (30) und an den Ports am Ein- und Ausgang des Gehäuses (100) können Mikrowellen in die Umgebung lecken. Dieses Problem ist lösbar durch Mikrowellenabsorber an den Ports und eine Drossel (Choke) über dem Schlitz. Die Größe des Schlitzes im Gehäuse ist bevorzugt kleiner als die Grenzlängenwelle.

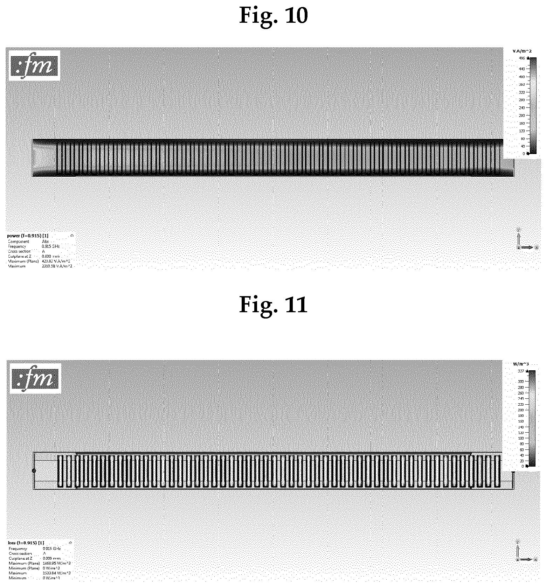

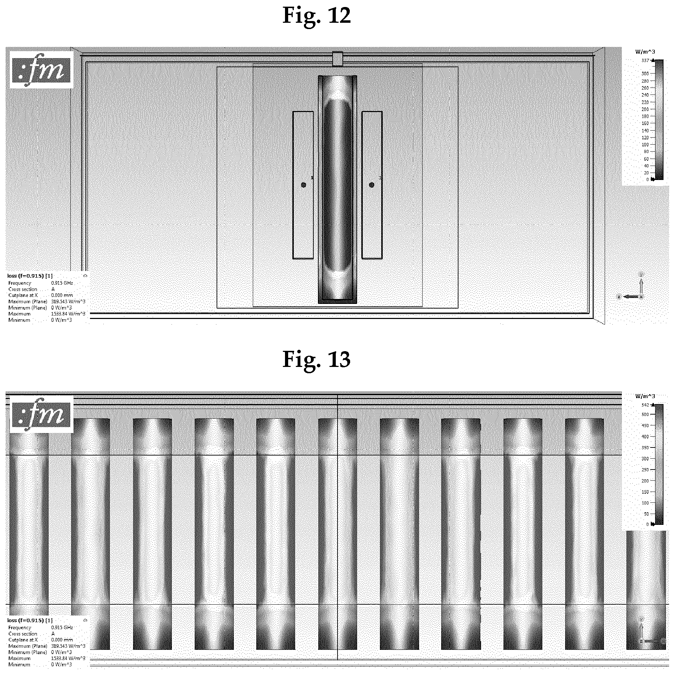

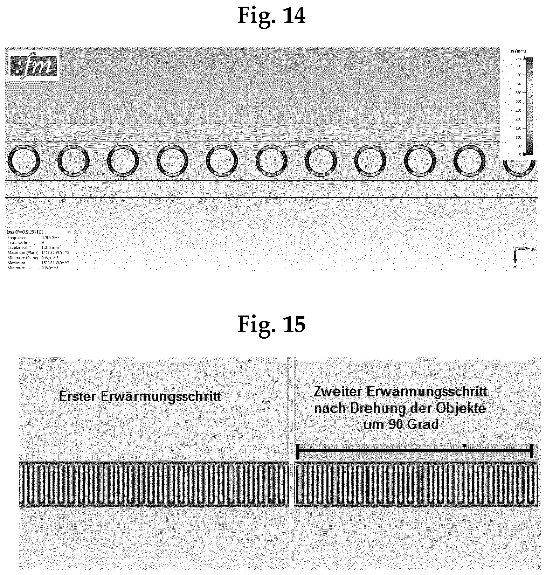

Figur 10 zeigt die Abnahme des Leistungsflusses in der Y-X-Ebene (in Längsrichtung) aufgrund der Absorption in den Vorformlingen. Eine einheitliche Wärme in den Vorformlingen ist aber erreichbar, in dem (i) die Vorformlinge durch das Feld transportiert werden und (ii) zudem gedreht werden. Die Figuren 11 bis 14 zeigen die Leistungsverlustdichte und die dissipative Wärmeentstehung in den Vorformlingen aus verschiedenen Winkeln. Figur 11 zeigt die Leistungsverlustdichte in der XY-Schnittebene (Längsschnitt). Figur 12 eine stirnseitige Ansicht der Leistungsverlustdichte bzw. die dissipative Wärmeerzeugung in der Y-Z Ebene. Figur 13 eine Seitenansicht der Leistungsverlustdichteverteilung bzw. die dissipative Wärmeerzeugung in der Y-Z Ebene der Vorformlinge (nicht geschnittenen). Figur 14 ist eine Draufsicht der Verlustleistungsdichte bzw. der dissipativen Wärmeerzeugung, also eine Ansicht in Längsachse der Vorformlinge (beispielhaft: Leistungsverlust (f=0.915): Frequenz 0,915 GHz, Querschnitt bei Y = 1.000 mm; Maximum (Fläche) 1457,95 W/m³; Minimum (Fläche) 0 W/m³; Maximum 1533,84 W/m³; Minimum 0 W/m³). Da die dissipative Wärmeerzeugung aufgrund des elektrischen Feldes seitenabhängig ist, weil das Feld senkrecht zur Laufrichtung der Kunststoffvorformlinge steht, müssen die Vorformlinge bevorzugt wie in Figur 15 gezeigt mindestens einmal um 90° gedreht werden.

Im Zusammenhang der dielektrischen Erwärmung der Kunststoff-vorformlinge ist ein maßgeblicher Faktor die materialabhängige Eindringtiefe der differenziellen Moden. Erfindungsgemäß erfolgt die Behandlung wegen der größeren Eindringtiefe bevorzugt bei einer Wellenlänge von 915 MHz. Im Unterschied zur herkömmlichen Erwärmung, wo der Wärmeeintrag stets durch die Oberfläche erfolgt, entsteht die dissipative Wärme bei der dielektrischen Erwärmung hauptsächlich innerhalb der Eindringtiefe. Diese ist abhängig von den frequenz- und temperaturabhängigen Anteilen der dielektrischen Funktion bzw. der Permittivität sowie von der Frequenz des elektromagnetischen Feldes. Bevorzugt ist eine Arbeitsfrequenz von 915 MHz, wenngleich handelsübliche Mikrowellenöfen mit 2,45 GHz arbeiten. Für die innerhalb der Eindringtiefe dissipierte Leistungsdichte gilt, dass sie abhängig ist von der Feldstärke im Inneren des Materials. Aus den Formeln zur Eindringtiefe und zur Leistungsverlustdichte folgt auch direkt die Bedeutung der simulierten Messung der komplexen dielektrischen Funktion im verwendeten Frequenz- bzw. Temperaturbereich. Aus dieser kann die Effizienz der Erwärmung des Dielektrikums bzw. des Kunststoffmaterials geschätzt werden kann. Entsprechend kann man die Leistung und die Betriebsfrequenz der errechneten Simulation anpassen.

Die hauptsächlichen Vorteile der dielektrischen Erwärmung sind der volumetrische Energieeintrag in das Material und die damit verbundene kürzere Erwärmungszeit. Auch erfolgt weniger Wärmefluss durch die Oberfläche des Materials, was dieses weniger belastet. Die dissipative Erwärmung im Volumen gleichförmiger. Dies erlaubt kürzere Arbeitstakte und bessere Ergebnisse. Dem steht die Beschränkung der Werkstoffe gegenüber, welche aufgrund ihrer dielektrischen Permittivität eine effektive dissipative Wärmeerzeugung zulassen. Die Permittivität des zu erhitzenden Materials kann gegebenenfalls durch die Zugabe von Partikeln modifiziert und verbessert werden.

Es wird in der Regel vorab ein Modell zu erstellen sein, welches das dielektrische Verhalten der Vorformlingen simuliert zwecks Anpassung der Impedanz, zur Charakterisierung des elektromagnetischen Feldes, des Leistungsflusses und der Leistungsverlustdichte. Hierzu sind die komplexe dielektrische Funktion, die Leitfähigkeit sowie ihre Frequenz- und Temperaturabhängigkeit zu ermitteln, so dass man die dielektrische Erwärmung simulieren und kontrollieren kann. Beide Aspekte, die Messung der dielektrischen Kennwerte und die Simulation des elektromagnetischen Feldes im Erwärmungsabschnitt wurden vorstehend anhand von Beispielen und Abbildungen dargestellt.

### SYNOPSiS

Fig. 1 zeigt das Prinzip des Durchlaufofens zum Blasen, Streckblasen oder Umformen von Kunststoff-Rohlingen zu Flaschen und Behältern. Der Mikrowellengenerator ist ein Magnetron mit einer Leistung von 2 bis 6 kW oder höher und erzeugt eine Frequenz im Band mit 900 MHz bis 930 MHz. Im Dauerstrichbetrieb kann der Leistungspegel des Magnetrons bei 2 kW liegen. Im Aufbau folgt auf den Generator ein Isolator, um Reflexionen zurück zum Generator zu verhindern. Die Isolationsdämpfung kann mindestens 23 dB sein, die Einfügungsdämpfung maximal 0,15 dB. Es folgt ein Tuner zur Anpassung der Impedanz. Der Tuner kann drei kapazitive, nicht kontaktierte Stifte haben, die auf der Zentrallinie des Hohlleiters im Abstand einer viertel Wellenlänge positioniert sind. Je ein Paar deckt etwa die Hälfte des gesamten abstimmbaren Bereiches im Smith-Diagramm ab. Die Signale des Generators werden differenziell mit einem Phasenversatz von 180 Grad auf zwei Leiterplatten eingespeist, so dass ein symmetrischer differenzieller Doppelleiter für ein leitergebundenes Mikrowellenfeld vorliegt. Der differenzielle Doppelleiter ist bevorzugt in einem Standardwellenleiter des Typs R9/RW975 mit den Abmessungen 123,825 mm zu 247,65 mm angeordnet. In diesem Gehäuse kann eine TEM-Welle von 915 MHz mit einer Stehmode quer zum Transportpfad wandern. Der Leiterhohlraum hat in einer Wand einen Schlitz, so dass die Vorformlinge durch das leitergebundene Mikrowellenfeld portiert werden können, bevorzugt unter Drehen. Besonders günstig ist ein Schlitz in der Deckenwand für eine hängende Halterung der Vorformlinge. Die Leiterplatten sind bevorzugt konturiert und durch Löcher oder Aussparungen konturiert zur Anpassung des elektrischen Feldkomponente an das erforderliche Erwärmungsprofil im Vorformling. Die Vorformlinge sind Diskontinuitäten im ansonsten stabilen leitergebundenen Monomodefeld, so dass sie kontrolliert auf ihrem Transportpfad im Volumen dielektrisch erwärmt werden. Dies zeigen die Simulationen der Verlustleistungsdichte. An den Diskontinuitäten gebildete höhere Moden konvertieren in die dominante leitergebundene Stehmode, die querlaufend in Richtung des Transportpfads wandert und die mit Vorformlingen wechselwirkt. Grundsätzlich verlangt die Simulation ein Modell mit allen Komponenten (Halterungen, Werkzeugen) und eine Kenntnis der Material- und sonstigen Eigenschaften der Vorformlinge (Leitfähigkeit, dielektrische Permittivität und Form). Die vorgestellte Simulation ist aber repräsentativ für die dielektrische Erwärmung in einem leitergebundenen symmetrischen Mikrowellenfeld mit einer querstehenden Mode, welche in Transport wandert und die sich insbesondere eignet zur dielektrischen Erwärmung von in gleicher Richtung kontinuierlich durchlaufenden Kunststoff-Vorformlingen, so dass diese durch Blasen bzw. Streckblasen zu Flaschen und Behältern umgeformt werden können. Gegenstand der dielektrischen Spektroskopie im Beispiel ist die Materialreaktion auf ein symmetrisches Wechselfeld, die zwar repräsentativ ist, aber nicht ohne weiteres auf andere Objekte übertragen werden kann. Bevorzugte Ausführungsformen der Erfindung kann der Fachmann jedoch den Ansprüchen und dem darin definierten Schutzbereich entnehmen.

### BEZUGSZEICHENLISTE

- 30: Schlitz, Längsschlitz für Objekthalterungen
- 40: Kunststoffvorformlinge, Objekt
- 50: Doppelleitersystem, Leiterplatten, differenzielles Leitersystem
- 90: Mikrowellenraum, Kavität
- 100: Mikrowellenhohlleiter, Außenleiter, Gehäuse, Umhausung

## Patentansprüche

1. Verfahren zum dielektrischen Erwärmen von Kunststoffvorformlingen in einem Durchlaufofen, um diese in eine gewünschte Gestalt umformen zu können, **dadurch gekennzeichnet, dass** mit einem Generator
(i) in zwei länglichen Leiterplatten (50) ein elektromagnetisches Feld mit einer Frequenz von 900 bis 930 MHz angelegt wird,
(ii) die Signale um eine halbe Wellenlänge versetzt differenziell auf die länglichen Leiterplatten eingespeist werden, so dass ein symmetrisches Wechselfeld vorliegt;
(iii) die länglichen Leiterplatten entsprechend dem zu erzeugenden Temperaturprofil in den Kunststoffvorformlingen (40) bemessen, konturiert oder strukturiert werden;
(iv) die zu erwärmenden Kunststoffvorformlinge auf einem Transportpfad im elektrischen Feld zwischen den länglichen Leiterplatten vorbewegt werden;
(v) die länglichen Leiterplatten (50) in einem Mikrowellenhohlraum (100) aufgenommen sind, der die Ausbreitung des leitergebundenen elektromagnetischen Feldes im Wesentlichen nicht dämpft oder stört;
(vi) der Mikrowellenhohlraum, das Leiterplattenpaar (50), die Frequenz und die dielektrische Konstante des Kunststoffvorformlings so gewählt werden, dass sich die leitergebundenen TEM-Wellen zwischen den symmetrischen Leiterplatten trotz der Diskontinuitäten aufgrund der Erwärmung des Kunststoffformlinge im Wesentlichen als Monomode-Welle quer zur Durchlaufrichtung ausbreiten.

2. Verfahren nach Anspruch 1, **dadurch gekennzeichnet, dass** im Schritt (ii) ein Balun eine Phasendifferenz von 180 Grad erzeugt.

3. Verfahren nach Anspruch 1 oder 2, **dadurch gekennzeichnet, dass** der Kunststoffvorformling durch einen Schlitz in der Mikrowellenkavität von einer externen Bewegungseinrichtung vorbewegt wird.

4. Verfahren nach irgendeinem vorhergehenden Anspruch 1 bis 3, **dadurch gekennzeichnet, dass** die Kunststoffvorformlinge zudem mindestens um 90° um die Längsachse gedreht werden.

5. Verfahren nach irgendeinem vorhergehenden Anspruch 1 bis 4, **dadurch gekennzeichnet, dass** die Kunststoffvorformlinge auf ihrem Transportpfad in der Erwärmungszone von einer Halteeinrichtung aus Mikrowellen-transparentem Material bewegt werden.

6. Vorrichtung zum Blasen von Kunststoffvorformlingen in eine gewünschte Gestalt, wobei die Kunststoffvorformlinge beim Durchlaufen einer Erwärmungszone mittels Mikrowellen dielektrisch erwärmt werden, **dadurch gekennzeichnet, dass** die Kunststoffvorformlinge auf ihrem Transportpfad ein symmetrisches Gegentakt-Mikrowellenfeld von 900 bis 930 MHz zwischen einem Leiterplattenpaar durchlaufen.

7. Vorrichtung nach Anspruch 6, **dadurch gekennzeichnet, dass** sie einen außerhalb der Erwärmungszone angeordnete Mikrowellengenerator aufweist sowie ein Balun zur Erzeugung einer Phasendifferenz um 180° für die Signale vor deren differenziellen Einspeisung auf ein Leiterplattenpaar.

8. Vorrichtung nach Anspruch 6 oder 7, **dadurch gekennzeichnet, dass** zwischen Mikrowellengenerator und differenziellen Leiterplattenpaar ein Isolator und ein Tuner zur Anpassung der Impedanz eingerichtet sind.

9. Vorrichtung nach einem der Ansprüche 6 bis 8, **dadurch gekennzeichnet, dass** das Balun eine Umwegleitung für die Phasenverschiebung an den beiden Ausgängen aufweist.

10. Vorrichtung nach einem der Ansprüche 6 bis 9, **dadurch gekennzeichnet, dass** die dielektrische Erwärmungseinrichtung in einer Anlage hoher Arbeitsgeschwindigkeit zum Blasen oder Streckblasen von Kunststoffvorformlinge zu Flaschen und Behältern integriert ist.

## Claims

1. Process for the dielectric heating of plastic preforms in a continuous furnace in order to be able to form them into a desired shape, **characterised in that**, using a generator
(i) an electromagnetic field having a frequency of 900 to 930 MHz is applied to two elongate conductor plates (50)
(ii) the signals are applied to the elongated conductor plates in a differential manner, offset by half a wavelength, so that a symmetrical alternating field is present
(iii) the elongated conductor plates are sized, contoured or patterned in accordance with the temperature profile to be produced in the plastic preforms (40); and
(iv) the plastic preforms to be heated are advanced along a transport path in the electric field between the elongate conductor plates; and
(v) the elongate conductor plates (50) are housed in a microwave cavity (100) which substantially does not attenuate or interfere with the propagation of the conductor-borne electromagnetic field; and
(vi) the microwave cavity, the pair of conductor plates (50), the frequency and the dielectric constant of the plastic preforms are selected such that the conductor-bound TEM waves propagate between the symmetrical conductor plates substantially as a single-mode wave transverse to the direction of propagation despite discontinuities due to heating of the plastic preforms.

2. The process of claim 1, **characterised in that** in step (ii) a balun produces a phase difference of 180 degrees.

3. The process of claim 1 or 2, **characterised in that** the plastic preform is advanced through a slot in the microwave cavity by an external moving device.

4. The process as claims in any of the preceding claims 1 to 3, **characterised in that** the plastic preforms are further rotated at least 90° about the longitudinal axis.

5. The process according to any of the preceding claims 1 to 4, **characterised in that** the plastic preforms are moved on their transport path in the heating zone by a holding device made of microwave-transparent material.

6. An apparatus for blowing plastic preforms into a desired shape, wherein the plastic preforms are dielectrically heated by means of microwaves as they pass through a heating zone, **characterised in that** the plastic preforms pass through a symmetrical push/pull microwave field of 900 to 930 MHz between a pair of conductor plates on their transport path.

7. The apparatus as claimed in claim 6, **characterised in that** it comprises a microwave generator located outside the heating zone and a balun to create a 180° phase difference for the signals before their differential feeding to a pair of conductor plates.

8. The apparatus as claimed in claim 6 or 7, **characterised in that** an isolator and a tuner for impedance matching are arranged between the microwave generator and the differential pair of printed circuit boards.

9. The apparatus as claimed in any one of claims 6 to 8, **characterised in that** the balun comprises a bypass line for the phase shift at the two outputs.

10. The apparatus as claimed in any one of claims 6 to 9, **characterised in that** the dielectric heating device is integrated in a high-speed equipment for blowing or stretch blow moulding plastic preforms into bottles and containers.

## Revendications

1. Procédé de chauffage diélectrique de préformes en plastique dans un four continu afin de leur donner la forme souhaitée, **caractérisé par le fait que**, à l'aide d'un générateur
(i) un champ électromagnétique d'une fréquence de 900 à 930 MHz est appliqué à deux plaques conductrices allongées (50)
(ii) les signaux sont appliqués aux plaques conductrices allongées de manière différentielle, avec un décalage d'une demi-longueur d'onde, de sorte qu'un champ alternatif symétrique est présent
(iii) les plaques conductrices allongées sont dimensionnées, profilées ou modelées en fonction du profil de température à produire dans les préformes en plastique (40) ; et
(iv) les préformes en plastique à chauffer sont avancées le long d'un chemin de transport dans le champ électrique entre les plaques conductrices allongées ; et
(v) les plaques conductrices allongées (50) sont logées dans une cavité micro-ondes (100) qui n'atténue pas ou n'interfère pas avec la propagation du champ électromagnétique conducteur ; et
(vi) la cavité micro-ondes, la paire de plaques conductrices (50), la fréquence et la constante diélectrique des préformes en plastique sont choisies de telle sorte que les ondes TEM liées aux conducteurs se propagent entre les plaques conductrices symétriques pratiquement comme une onde monomode transversale à la direction de propagation malgré les discontinuités dues au chauffage des préformes en plastique.

2. Le procédé de la revendication 1, **caractérisé par le fait qu'**à l'étape (ii), un Balun produit une différence de phase de 180 degrés.

3. Le procédé de la revendication 1 ou 2, **caractérisé par le fait que** la préforme en plastique est avancée à travers une fente dans la cavité micro-ondes par un dispositif de déplacement externe.

4. Le procédé selon l'une des revendications précédentes 1 à 3, **caractérisé par le fait que** les préformes en plastique subissent une rotation supplémentaire d'au moins 90° autour de l'axe longitudinal.

5. Le procédé selon l'une des revendications précédentes 1 à 4, **caractérisé par le fait que** les préformes en plastique sont déplacées sur leur trajectoire de transport dans la zone de chauffage par un dispositif de maintien constitué d'un matériau transparent aux micro-ondes.

6. Appareil pour souffler des préformes en plastique dans une forme désirée, dans lequel les préformes en plastique sont chauffées diélectriquement au moyen de micro-ondes lorsqu'elles traversent une zone de chauffage, **caractérisé par le fait que** les préformes en plastique traversent un champ de micro-ondes symétrique pousser/tirer de 900 à 930 MHz entre une paire de plaques conductrices sur leur trajectoire de transport.

7. L'appareil selon la revendication 6, **caractérisé en ce qu'**il comprend un générateur de micro-ondes situé à l'extérieur de la zone de chauffage et un Balun pour créer une différence de phase de 180° pour les signaux avant leur alimentation différentielle vers une paire de plaques conductrices.

8. L'appareil selon la revendication 6 ou 7, **caractérisé par le fait qu'**un isolateur et un accordeur pour l'adaptation de l'impédance sont disposés entre le générateur de micro-ondes et la paire différentielle de plaques conductrices.

9. L'appareil selon l'une des revendications 6 à 8, **caractérisé par le fait que** le Balun comprend une ligne de dérivation pour le déphasage aux deux sorties.

10. L'appareil visé à l'une quelconque des revendications 6 à 9, **caractérisé par le fait que** le dispositif de chauffage diélectrique est intégré dans un équipement à grande vitesse pour le soufflage ou l'étirage-soufflage de préformes en plastique dans des bouteilles et des conteneurs.
